# EUROPÄISCHE PATENTSCHRIFT

(11) **EP 3 059 118 B1**
(45) Veröffentlichungstag und Bekanntmachung des Hinweises auf die Patenterteilung: **22.08.2018**
(21) Anmeldenummer: 16154166.9
(22) Anmeldetag: 04.02.2016
(51) Int. Cl.: B60N 2/68, B60N 2/22, B60N 2/20, B60N 2/23

(54) **KRÄFTEDREIBEIN**
FORCE TRIPOD
TREPIED DE FORCES

(30) Priorität: 19.02.2015 DE 102015102395
(43) Veröffentlichungstag der Anmeldung: 24.08.2016
(73) Patentinhaber: GRAMMER AG, 92224 Amberg (DE)
(72) Erfinder: Demleitner, Berthold, 92272 Freudenberg (DE); Schustjew, Sergej, 92237 Sulzbach-Rosenberg (DE); Übelacker, Roland, 92536 Pfreimd (DE)
(74) Vertreter: Hannke, Christian

(56) Entgegenhaltungen:
- CN-U- 203 805 734
- DE-A1- 19 849 994
- DE-B3-102006 004 531
- US-A- 2 834 402

## Beschreibung

Die Erfindung betrifft einen Fahrzeugsitz, insbesondere zum Einsatz in einem Lastkraftwagen, umfassend ein Sitzteil, einen Sitzteilrahmen und eine Rückenlehne, die mittels mindestens einer Schwenkachse mit dem Sitzteilrahmen schwenkbar verbunden ist, so dass die Rückenlehne vor allem in eine Nicht-Gebrauchsstellung nach vorne verschwenken zu können, um hinter dem Sitz mehr Freiraum schaffen zu können.

Aus dem Stand der Technik sind Fahrzeugsitze für Fahrzeuge, besonders im Automobilbereich, bekannt, dessen Rückenlehnen nach vorne verschwenkbar sind, um beispielsweise einer Person ein Einsteigen des Autos zu erleichtern, insbesondere dann, wenn der Fahrgast auf einer hinteren Rückbank Platz nehmen möchte und nur ein Einstieg durch die Fahrer- oder Beifahrertür möglich ist.

Derartige Fahrzeugsitze sind dabei wie folgend ausgestaltet. Um dem Fahrgast das Einsteigen zu erleichtern, ist ein Hebelmechanismus vorgesehen, der eine Verbindung des Sitzes mit einer Gleitschiene oder dergleichen löst und so der Sitz frei nach vorne verschoben werden kann. Des Weiteren ist die Rückenlehne stufenlos nach vorne umklappbar, um so dem Fahrgast möglichst viel Freiraum für den Einstieg zu bieten. Die Schwenkachse ist dabei an einem hinteren Abschnitt des Sitzteils und an dem unteren Ende der Rückenlehne angeordnet, üblicherweise meist mittels eines Recliners.

Durch eine solche Anordnung der Schwenkachse ist aber ein sehr stabiler und starrer Rahmen des Sitzes notwendig, um, beispielsweise bei einem Unfall, einen möglichst großen Anteil der einwirkenden Kraft aufzunehmen. Die einwirkende Kraft wird dabei durch einen angelegten Sicherheitsgurt aufgenommen und an den Sitz übertragen. Aufgrund der oben beschriebenen Bauweise ist jedoch der Rahmen des Sitzes derart massiv ausgebildet, dass der Sitz ein sehr hohes Gewicht aufweist.

Ein gattungsgemässer Fahrzeugsitz ist aus DE19849994A bekannt. Es ist demzufolge Aufgabe der vorliegenden Erfindung, einen Fahrzeugsitz bereitzustellen, der einerseits insbesondere in einem verschwenkten Zustand viel Freiraum hinter dem Sitz bietet und dabei zusätzlich möglichst leicht aufgebaut ist, ohne Einbußen bei der Sicherheit im Falle eines Unfalls in Kauf zu nehmen.

Gelöst wird diese Aufgabe gemäß den Merkmalen des Patentanspruches 1.

Ein wesentlicher Punkt der Erfindung liegt darin, einen Fahrzeugsitz mit einem Sitzteil, einem Sitzteilrahmen und einer Rückenlehne, die mittels mindestens einer Schwenkachse mit dem Sitzteilrahmen schwenkbar verbunden ist, bereitzustellen, wobei durch einen ersten Schwenkpunkt, der auf der Schwenkachse angeordnet ist, einen Angriffspunkt, der in einem oberen Bereich der Rückenlehne angeordnet ist, und einen Befestigungspunkt zur Befestigung mindestens eines Dämpfers, wobei der Dämpfer im Wesentlichen in Rückenlehnenhöhenrichtung ausgerichtet ist und mit der Rückenlehne einerseits sowie mit dem Sitzteilrahmen mittels des Befestigungspunkts andererseits wirkverbunden ist, Eckpunkte eines Dreiecks definiert sind, entlang dessen Seiten Vektoren von Kräften verlaufend angeordnet sind, wobei sich bei einer Nach-vorne-Verschwenkung der Rückenlehne durch eine auf die Rückenlehne einwirkenden Kraft von dem Angriffspunkt zu dem ersten Schwenkpunkt hin ein erster Vektor einer Zugkraft und sich von dem Befestigungspunkt zu dem Angriffspunkt hin ein zweiter Vektor einer Druckkraft erstreckt.

Bei der Schwenkachse kann es sich hierbei entweder um eine reelle oder eine virtuelle Schwenkachse handeln. Dabei kann die Schwenkachse nahezu beliebig ausgebildet sein.

Vorteilhafterweise ist die Schwenkachse in Fahrzeugbreitenrichtung verlaufend angeordnet und in Fahrzeugsitzlängsrichtung gesehen in einem mittleren Drittel des Sitzteilrahmens angeordnet ist. Es ist jedoch auch denkbar, dass die Schwenkachse sich in Fahrzeugsitzlängsrichtung gesehen in einer hinteren Hälfte des Sitzteilrahmens befindet.

Vorzugsweise ist die Schwenkachse auch unterhalb des Sitzteils an sich angeordnet. Durch eine derartige Anordnung der Schwenkachse kann eine möglichst vorteilhafte Verschwenkung der Rückenlehne, die sich in einer Nicht-Gebrauchsstellung befindet, realisiert werden. Die Schwenkachse kann dabei abhängig von der Ausgestaltung eines Polsters des Sitzteils und eines Polsters der Rückenlehne gewählt werden, so dass eine möglichst große Verschwenkung der Rückenlehne nach vorne möglich ist, ohne dass die Polster des Sitzteils und der Rückenlehne sich behindern und so eine Verschwenkung der Rückenlehne nach vorne behindern würden.

Grundsätzlich ist es auch denkbar, dass der Fahrzeugsitz als Ganzes in Fahrzeugsitzlängsrichtung verschoben werden kann, um noch mehr Freiraum hinter dem Sitz anzubieten zu können. In diesem Fall ist auch noch die Position des Lenkrads von Bedeutung und zu beachten, da dieses eine Verschwenkung der Rückenlehne nach vorne ebenso behindern könnte.

Der erste Schwenkpunkt ist dabei vorteilhaft in einem ersten Endbereich der Schwenkachse vorgesehen.

Der Befestigungspunkt ist vorzugsweise in Fahrzeugsitzlängsrichtung gesehen hinter einem hinteren Abschnitt des Sitzteilrahmens angeordnet und ist durch ein Verbindungselement mit diesem hinteren Abschnitt wirkverbunden. Dabei befindet sich der Befestigungspunkt vorteilhaft auf der Höhe des Sitzteilrahmens, also insgesamt gesehen befindet sich der Befestigungspunkt im hinteren, unteren Teil des Fahrzeugsitzes.

Ein solches Verbindungselement kann vielfältig ausgestaltet und mit dem hinteren Abschnitt des Sitzteilrahmens verbunden sein. Eine Möglichkeit ist, dass das Verbindungselement ein Blech oder ein Abschnitt eines Vierkantrohres ist, das mit dem hinteren Abschnitt des Sitzteilrahmens verschweißt ist. Hierdurch kann auch die Position des Befestigungspunktes variiert werden, insbesondere dann, wenn das Verbindungselement in seiner Position, also insbesondere in seiner Höhe und/oder in seiner Position in Fahrzeugsitzlängsrichtung veränderbar ist, wodurch weitere Einstellmöglichkeiten des Sitzes gewährleistet werden können.

Wie obig beschrieben, ist mittels des Befestigungspunkts ein Dämpfer mit dem Sitzteilrahmen wirkverbunden. Der Dämpfer ist dabei in Rückenlehnenhöhenrichtung oder in einem Winkel zur Rückenlehnenhöhenrichtung ausgerichtet, vorzugsweise jedoch in Rückenlehnenhöhenrichtung. Weiter ist der Dämpfer mit dem Sitzteilrahmen mittels des Befestigungspunkts einerseits und mit der Rückenlehne andererseits wirkverbunden. In einer Ausführungsform umfasst der Dämpfer einen ersten und einen zweiten Endbereich, wobei der Dämpfer mittels des ersten Endbereichs mit dem Befestigungspunkt und mittels des zweiten Endbereichs mit der Rückenlehne verbunden ist.

In einer weiteren Ausführungsform ist es denkbar, dass der zweite Endbereich des Dämpfers mit dem Angriffspunkt wirkverbunden ist, so dass ein möglichst direktes Zusammenspiel zwischen dem Angriffspunkt und dem Dämpfer möglich ist.

In einer anderen Ausführungsform ist der erste Endbereich des Dämpfers lösbar mit dem Befestigungspunkt verbunden. Dadurch, dass der Dämpfer von dem Befestigungspunkt gelöst werden kann, erleichtert sich ein Nach-Vorne-Verschwenken der Rückenlehne deutlich. Eine lösbare Verbindung kann hier beispielsweise durch eine Arretierung, wie einer Rasterung oder einer Federbremse realisiert werden.

Der Angriffspunkt, ist wie oben beschrieben, in einem oberen Bereich der Rückenlehne angeordnet, vorzugsweise in einer oberen Hälfte der Rückenlehne, und noch bevorzugter in einem oberen Viertel der Rückenlehne. Der Angriffspunkt ist dabei erfindungsgemäss durch einen an der Rückenlehne, bevorzugt an einem Rückenlehnenrahmen, befestigten Gurtabrollmechanismus gegeben.

Ein Sicherheitsgurt für einen Sitz ist dabei bevorzugt ein herkömmlicher Dreipunktgurt, so wie er aus dem Stand der Technik bekannt ist. Es sind jedoch auch andere Ausgestaltungen eines Sicherheitsgurtes denkbar. Ein solcher Dreipunktgurt lässt sich in zwei Bereiche unterteilen, einen Brustgurt und einen Beckengurt. Im Falle eines Unfalls wird dabei der Fahrer oder der Fahrgast durch den Sicherheitsgurt am Sitz gehalten. Es wirken also im Falle eines Unfalls Kräfte auf den Sicherheitsgurt ein, die sich im Abrollmechanismus konzentrieren, da der Gurt dort seinen Ausgangspunkt hat.

Es ist daher eine weitere Aufgabe der vorliegenden Erfindung, dass möglichst große Kräfte durch den Fahrzeugsitz aufgenommen werden kann, ohne dabei strukturell nachzugeben und kritische Deformationen zu erfahren.

Dies wird im Folgenden näher erläutert werden. Die obig genannten Punkte, der Angriffspunkt, der Befestigungspunkt und der erste Schwenkpunkt bilden dabei die Eckpunkte eines Dreiecks, an dessen Seiten Vektoren von Kräften verlaufend angeordnet sind. Dabei sind die Vektoren derart, dass bei einer Nach-vorne-Verschwenkung der Rückenlehne, etwa durch einen Unfall oder dergleichen, durch eine auf die Rückenlehne einwirkende Kraft von dem Angriffspunkt zu dem ersten Schwenkpunkt hin ein erster Vektor einer Druckkraft und sich von dem Befestigungspunkt zu dem Angriffspunkt hin ein zweiter Vektor einer Zugkraft erstreckt.

Dabei ist die auf die Rückenlehne einwirkende Kraft oftmals die Kraft, mit der der Gurt den Fahrer bzw. den Fahrgast im Sitz hält und am Angriffspunkt auf die Rückenlehne angreift. Damit möglichst große Kräfte übertragen werden können, ist es nötig, dass die einwirkende Kraft möglichst gut verteilt und abgeleitet werden kann. Es ist daher vorteilhaft und zweckmäßig, die einwirkende Kraft nach ihren jeweiligen Komponenten aufzuteilen, speziell bei einem Nach-vorne-Verschwenken der Rückenlehne in eine Druckkomponente, dargestellt durch einen ersten Vektor einer Druckkraft, und eine Zugkomponente, dargestellt durch einen zweiten Vektor einer Zugkraft.

Dabei sind der erste Vektor von dem Angriffspunkt zu dem ersten Schwenkpunkt hin verlaufend angeordnet, und der zweite Vektor von dem Befestigungspunkt zu dem Angriffspunkt hin verlaufend angeordnet. Insbesondere wird die Zugkomponente dadurch realisiert, dass der angeordnete Dämpfer im zugbelasteten Bereich eingestellt ist. Dadurch kann vom Dämpfer immer die Zugkomponente aufgenommen werden, die verbleibende Komponente ist daher nur noch eine Druckkomponente.

Eine besonders einfache Aufteilung der einwirkenden Kraft in eine Zugkomponente und eine Druckkomponente im Fall des Nach-vorne-Verschwenkens der Rückenlehne ist dadurch gegeben, wenn die drei Punkte, der Befestigungspunkt, der Angriffspunkt und der erste Schwenkpunkt über mindestens ein Bauelement miteinander wirkverbunden sind.

Dies kann beispielsweise dadurch realisiert werden, dass diese drei Punkte mittels einer Blechverbindung, das vorteilhaft die Form eines Dreiecks aufweist, miteinander verbunden sind und die Punkte im Wesentlichen die Eckpunkte des Dreiecks bilden.

Die Vektoren verlaufen dabei entlang den Seiten des Blechdreiecks, wobei der Dämpfer vorzugsweise mit seinem zweiten Endbereich mit diesem Blechdreieck so verbunden ist, dass er im Wesentlichen entlang der Seite des Dreiecks zwischen dem Angriffspunkt und dem Befestigungspunkt ausgerichtet ist.

Eine andere Ausführungsform ist, dass der erste Schwenkpunkt und der Angriffspunkt mittels einer Verbindungsstruktur verbunden sind und der Dämpfer, vorteilhaft mit seinem zweiten Endbereich, mit dieser Verbindungsstruktur verbunden ist. Die Verbindungsstruktur kann beispielsweise eine Strebe, ein Stab oder dergleichen sein.

Unabhängig von der Ausgestaltung des Dreiecks wird dabei immer die einwirkende Kraft in eine Druckkomponente und in eine Zugkomponente aufgeteilt. Durch diese weite räumliche Trennung von Zug- und Druckkomponente wird erzielt, dass im Wesentlichen lediglich Zug- und Druckkräfte von der Verbindungsstruktur bewältigt werden müssen. Dadurch können kritische Kraftkonzentrationen auf ein vernachlässigbares Maß reduziert werden.

Je größer die durch den ersten und den zweiten Vektor gebildete Fläche ist, desto größer ist das dabei auftretende Flächenträgheitsmoment. Je größer das Flächenträgheitsmoment ist, desto größere Kräfte können aufgenommen werden. Allerdings kann die Fläche nicht beliebig groß werden, da sich mit größer werdender Fläche die Torsion auf die Fläche erhöht. Dadurch wächst die Gefahr, dass die Bauteile, beispielsweise der Blechverbindung oder die Verbindungsstruktur allgemein, zur Seite wegknicken und dadurch den Sitz beschädigen können. Es erscheint daher sinnvoll, je nach Ausführung der Struktur, zusätzliche Versteifungen zwischen den Kraftkomponenten aufnehmenden Bauteilen vorzusehen, die ein solches Wegknicken verhindern sollen.

Es ist daher sinnvoll, die Verbindungsstruktur, wie etwa die Blechverbindung, in einer Ebene anzuordnen, die durch die drei verschiedenen Punkte definiert ist. Vorzugsweise sind der Befestigungspunkt, der Angriffspunkt und der erste Schwenkpunkt in einer Ebene, die parallel zu der durch die Fahrzeugsitzlängsrichtung und Fahrzeugsitzhöhenrichtung aufgespannten Ebene ist. Hierdurch kann die Gefahr des Wegknickens weiter minimiert werden.

Um weiter möglichst viel Freiraum hinter dem Fahrzeugsitz anbieten zu können, ist es vorteilhaft, wenn das durch die Punkte aufgespannte Dreieck seitlich links oder seitlich rechts des Fahrzeugsitzes angeordnet ist. Dies bedeutet insbesondere, dass der Dämpfer sich ebenfalls auf einer Seite des Fahrzeugsitzes befindet, vorzugsweise der Seite des Sitzes, die näher an der Seitenkarosserie des Fahrzeugs ist. Es ist jedoch auch denkbar, dass sowohl auf der linken als auch auf der rechten Seite des Fahrzeugsitzes ein derartiger Dämpfer angeordnet ist.

Es ist auch weiter vorgesehen, weitere Schwenkachsen zu verwenden. Beispielsweise ist es möglich, in Fahrzeugsitzhöhenrichtung gesehen oberhalb des Sitzteils eine zweite Schwenkachse der Rückenlehne zu installieren. Die Rückenlehne weist dann vorteilhaft einen oberen und einen unteren Teil auf, wobei der obere Teil gegenüber dem unteren Teil mittels der zweiten Schwenkachse verschwenkt werden kann. Dadurch kann sowohl im Betrieb, also wenn ein Fahrer bzw. Fahrgast auf dem Fahrzeugsitz sitzt, als auch beim reinen Nach-vorne-Verschwenken der Rückenlehne zum Platzgewinn hinter dem Fahrzeugsitz die Rückenlehne sehr gut verschwenkt und eingestellt werden. Die zusätzlichen Verschwenkbewegungen mittels der zweiten Schwenkachse erlauben es einem Fahrer bzw. einem Fahrgast insbesondere, die Rückenlehne nach ihren Komfortverständnissen einzustellen.

Die Rückenlehne ist also sowohl um eine erste Schwenkachse als Ganzes schwenkbar als auch um die zweite Schwenkachse ein oberes Teil der Rückenlehne gegenüber einem unteren Teil der Rückenlehne verschwenkbar. Hierbei ist zu beachten, dass die Kraft, die auf den Fahrzeugsitz einwirkt, weiterhin zuerst durch den Angriffspunkt, also beispielsweise durch einen Gurtabrollmechanismus aufgenommen wird. Der Gurtabrollmechanismus ist dabei vorzugsweise im oberen Teil der Rückenlehne vorgesehen.

Die einwirkende Kraft wird mittels des Rückenlehnenoberteils an das Rückenlehnenunterteil weitergeleitet. Diese Weiterleitung geschieht hierbei also mittels der zweiten Schwenkachse, die das Rückenlehnenoberteil und das Rückenlehnenoberteil miteinander verbindet. Die Kraft, die also im Angriffspunkt, vorliegend den Gurtabrollmechanismus, einwirkt, wirkt durch die schwenkbare Verbindung des Rückenlehnenoberteils mit dem Rückenlehnenunterteil mittels der zweiten Schwenkachse also ebenso auf die zweite Schwenkachse ein.

Somit kann auch die zweite Schwenkachse als ein Angriffspunkt angesehen werden. Vorteilhaft ist bei Verwendung einer zweiten Schwenkachse also eine Blechverbindung zwischen der zweiten Schwenkachse, insbesondere einem Ende der zweiten Schwenkachse, das nun als Angriffspunkt bezeichnet wird, dem ersten Schwenkpunkt und dem Befestigungspunkt vorgesehen.

Darüber hinaus wird durch den eingebauten Dämpfer im Betrieb der Komfort des Fahrers bzw. des Fahrgastes weiter verbessert, da der Dämpfer bereits auch kleinere, unkritische Schwingungen aufnehmen kann und somit nicht auf den Fahrer einwirken, wodurch das Komfortgefühl weiter erhöht wird.

Es ist allerdings zu beachten, dass je nach Einbauweise des Dämpfers es möglich ist, dass bei einer Nach-hinten-Verschwenkung der Vektor zwischen dem Angriffspunkt und dem Befestigungspunkt ein Vektor einer Druckkraft ist und der Vektor zwischen dem Angriffspunkt und dem ersten Schwenkpunkt ein Vektor einer Zugkraft ist. Dies bedeutet also, dass bei einer Nach-vorne-Verschwenkung der Dämpfer zugbelastet und bei einer Nach-hinten-Verschwenkung der Dämpfer druckbelastet ist. Da jedoch die Nach-hinten-Verschwenkung der Rückenlehne aufgrund der Einbauweise des Sitzes meist vernachlässigbar ist, wird eine solche Änderung des Dämpfers von Zug auf Druck in Kauf genommen.

Vorteilhafterweise ist ein zweiter Schwenkpunkt in einem zweiten Endbereich der ersten Schwenkachse vorgesehen. Der erste Schwenkpunkt, der zweite Schwenkpunkt und der Angriffspunkt bilden im vorliegenden Fall etwa die Bereiche, an denen der Dreipunktgurt an dem Fahrzeugsitz befestigt ist. Wie oben beschrieben ist dabei im Falle einer Nach-vorne-Verschwenkung der Rückenlehne ein Vektor einer Druckkraft zwischen Angriffspunkt und dem ersten Schwenkpunkt verlaufend angeordnet, wobei die Verbindungsstrecke zwischen dem zweiten Schwenkpunkt und dem Angriffspunkt ebenso in diesem Fall einen weiteren Vektor der Druckkraft umfasst. Die Druckkomponente der einwirkenden Kraft wird also wie vorliegend auf zwei Druckvektoren aufgeteilt, den ersten Vektor einer Druckkraft und den zweiten Vektor einer Druckkraft. Hierdurch wird die Belastung insgesamt auf die bauliche Struktur des Sitzes weiter verringert und es können somit größere Kräfte aufgenommen werden.

So ist es beispielsweise möglich, dass die Verbindungsstruktur, verlaufend von dem Angriffspunkt zum ersten Schwenkpunkt, etwa 70% der Druckkomponente aufnimmt und die restlichen 30% zwischen dem Angriffspunkt und dem zweiten Schwenkpunkt aufgenommen werden.

Der mindestens eine Dämpfer kann dabei verschieden ausgestaltet sein. So ist es beispielsweise denkbar, dass der Dämpfer ein herkömmlicher Einrohr-Dämpfer oder ein herkömmlieher Zweirohr-Dämpfer ist. Selbstverständlich sind auch andere Ausführungsformen des Dämpfers möglich, wie sie aus dem Stand der Technik bekannt sind.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: einen Fahrzeugsitz in einer perspektivischen Vorderansicht in einer Sitzposition
- Fig. 1B: den Fahrzeugsitz gemäß Figur 1A in einer perspektivischen Rückansicht
- Fig. 2A: den Fahrzeugsitz gemäß Figur 1A mit einer nach vorne verschwenkten Rückenlehne
- Fig. 2B: den Fahrzeugsitz gemäß Figur 2A in einer Seitenansicht in einer Sitzposition
- Fig. 3: den Fahrzeugsitz mit nach vorne verschwenkter Rückenlehne abhängig vom ersten Schwenkpunkt
- Fig. 4A: den Fahrzeugsitz in einer Seitenansicht mit dem durch die Punkte aufgespannten Dreieck
- Fig. 4B: den Fahrzeugsitz nach Figur 4A in einer perspektivischen Vorderansicht
- Fig. 5A: den Fahrzeugsitz nach Figur 4A mit einer nach vorne verschwenkten Rückenlehne
- Fig. 5B: den Fahrzeugsitz nach Figur 4B mit einer nach vorne verschwenkten Rückenlehne
- Fig. 6A: den Fahrzeugsitz nach Figur 4A mit einer nach hinten verschwenkten Rückenlehne
- Fig. 6B: den Fahrzeugsitz nach Figur 4B mit einer nach hinten verschwenkten Rückenlehne
- Fig. 7: den Fahrzeugsitz in einer Seitenansicht umfassend die Sitzposition, die nach vorne verschwenkte Rückenlehne und die nach hinten verschwenkte Rückenlehne

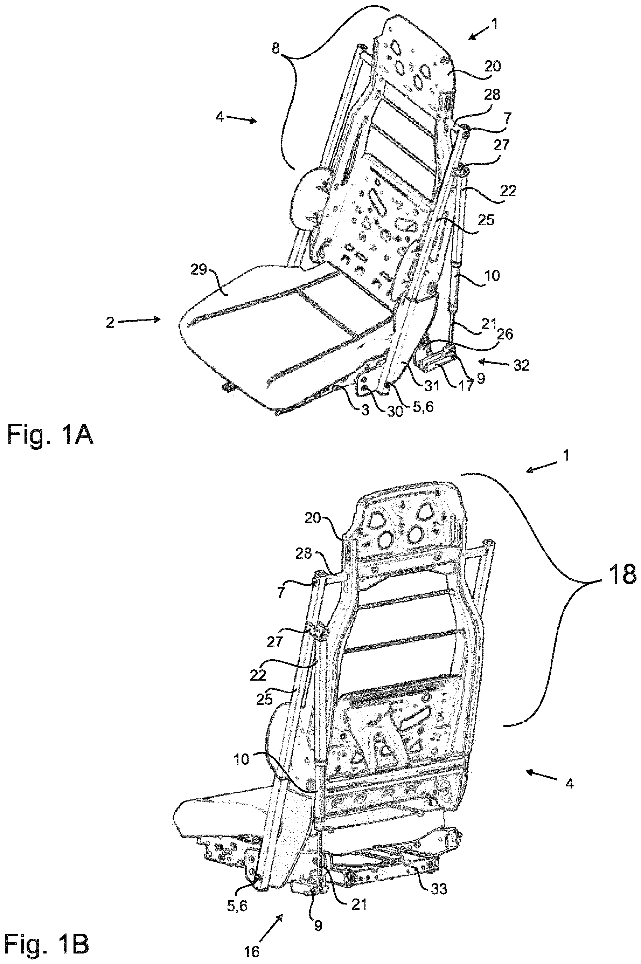

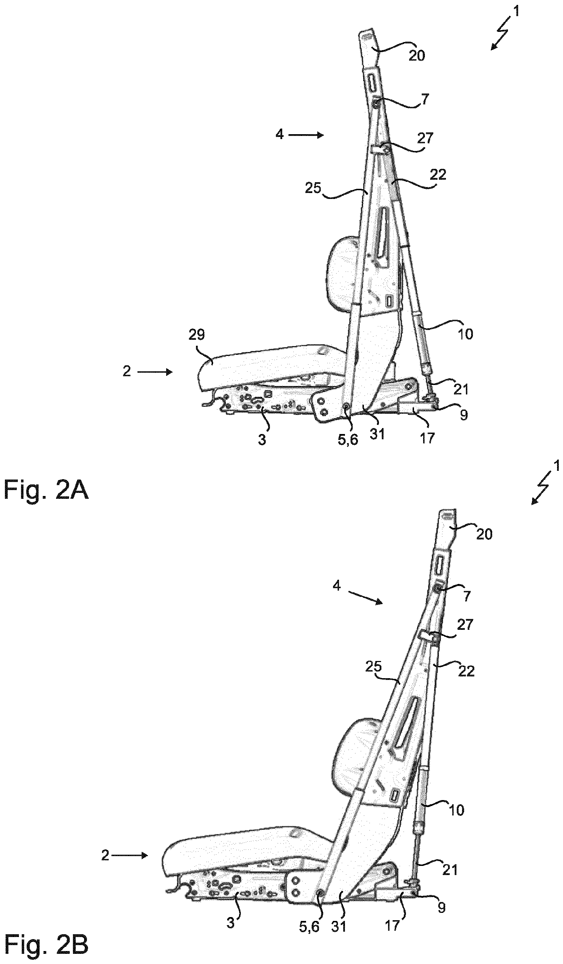

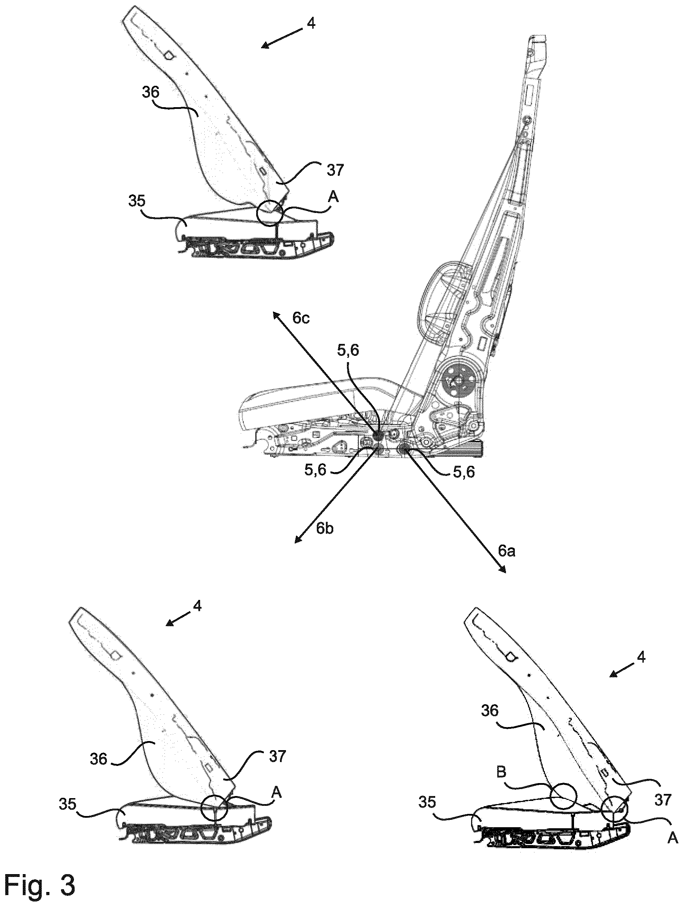

Der in den Figuren 1A und 1B sowie den Figuren 2A und 2B gezeigte Fahrzeugsitz 1 umfasst ein Sitzteil 2 mit einem Sitzpolster 29, das auf einem Sitzteilrahmen 3 aufgebracht und befestigt ist. Ferner ist ein Rückenlehnenrahmen 20 zu sehen, auf dem ein Rückenlehnenpolster (hier nicht gezeigt) aufgebracht werden kann. Der Rückenlehnenrahmen 20 ist dabei mittels einer Schwenkachse 5 mit dem Sitzteilrahmen 3 schwenkbar verbunden. Die Schwenkachse befindet sich hierbei unterhalb des Sitzteils 2 und insbesondere unterhalb des Sitzpolsters 29 und ist in Fahrzeugsitzlängsrichtung (L) gesehen bevorzugt in einem hinteren Bereich des Sitzteilrahmens 3 angeordnet, bevorzugter im mittleren Drittel des Sitzteilrahmens 3. Eine detailliertere Darstellung der Position der Schwenkachse 5 wird nachfolgend zur Figur 3 beschrieben.

Wie weiter aus den Figuren 1A und 1B zu erkennen ist, sind auch andere Positionen für die Schwenkachse denkbar, wie durch Löcher 30 eines Verbindungsstücks 31 zu sehen ist. Das Verbindungsstück 31 ist dazu vorgesehen, den Rückenlehnenrahmen 20 mit der Schwenkachse 5 und insbesondere dem Sitzteilrahmen 3 zu verbinden. Das Verbindungsstück 31 ist dabei vorzugsweise im Wesentlichen L-förmig ausgestaltet, so dass die Rückenlehne 4 von der Schwenkachse 5 aus in Fahrzeugsitzlängsrichtung (L) weiter hinten angeordnet ist. Durch eine solche Ausgestaltung des Verbindungselements 31 wird dem Fahrer bzw. dem Fahrgast möglichst viel Sitzfläche bereitgestellt. Es sind natürlich auch andere Ausgestaltungsformen des Verbindungselements 31 möglich, solange die Rückenlehne 4 in Fahrzeugsitzlängsrichtung (L) gesehen hinter der Schwenkachse 5 angeordnet werden kann.

Weiter ist aus den Figuren ersichtlich, dass ein Dämpfer 10, der mit dem Sitzteilrahmen 3 und in diesem Fall mit dem Rückenlehnenrahmen 20 verbunden ist, vorgesehen ist. Einerseits ist der Dämpfer 10 mit einem ersten Endbereich 21 mit dem Befestigungspunkt 9 mittels eines Verbindungselements 17 verbunden, wobei dieses Verbindungselement 17 mit einem in Fahrzeugsitzlängsrichtung (L) gesehen hinterem Abschnitt 16 des Sitzteilrahmens 3 verbunden ist. Dabei ist es beispielsweise denkbar, dass das Verbindungselement 17 mittels eines Blechstücks 26 oder dergleichen an dem hinteren Abschnitt 16 befestigt ist. Mittels dieses Blechstücks 26 kann die Position des Verbindungselements 17 und somit auch die Position des Befestigungspunkts 9, insbesondere in Fahrzeugsitzbreitenrichtung verändert werden. Ein zweiter Endbereich 22 des Dämpfers 10 ist hierbei mit einer Verbindungsstruktur 25, die zwischen dem ersten Schwenkpunkt 6, der auf der Schwenkachse 5, insbesondere einem Endbereich der Schwenkachse (hier nicht gezeigt), angeordnet ist, und einem Angriffspunkt 7 verlaufend angeordnet ist, verbunden. Eine solche Verbindung des zweiten Endbereichs 22 des Dämpfers 10 mit der Verbindungsstruktur 25 ist beispielsweise möglich durch einen am Endbereich 22 und der Verbindungsstruktur 25 befestigten Verbinder 27. Bevorzugt ist der Verbinder 27 starr mit der Verbindungsstruktur 25 verbunden, etwa durch ein Anschweißen des Verbinders, und schwenkbar mit dem zweiten Endbereich 22 des Dämpfers 10 verbunden, so dass der Dämpfer 10 sich beim Verschwenken der Rückenlehne 4 mitverschwenken kann.

Es ist jedoch auch denkbar, dass der zweite Endbereich 22 des Dämpfers mit dem Angriffspunkt 7 direkt verbunden ist. Dies ist jedoch strukturell aufgrund der dann benötigten Länge des Dämpfers 10 schwierig zu realisieren.

Bevorzugt sind die drei Punkte, der erste Schwenkpunkt 6, der Angriffspunkt 7 und der Befestigungspunkt 9 derart angeordnet, dass sie eine Ebene aufspannen, die parallel zu der durch die Fahrzeugsitzlängsrichtung (L) und Fahrzeugsitzhöhenrichtung (H) aufgespannten Ebene parallel verläuft.

Ein besonders leichtes Verschwenken der Rückenlehne 4, wenn sich der Sitz nicht in Gebrauch befindet, also sich keine Person darauf befindet, wird dadurch ermöglicht, wenn der erste Endbereich 21 des Dämpfers 10 lösbar mit dem Verbindungselement verbunden ist. Eine solche lösbare Verbindung kann vielfältig ausgestaltet sein und ist aus dem Stand der Technik wohlbekannt und wird hier nicht weiter ausgeführt.

Um die Stabilität der Rückenlehne 4 weiter zu unterstützen, werden vorteilhaft weitere bauliche Elemente vorgesehen, wie aus den Figuren erkennbar ist. Solche Elemente sind beispielsweise eine Querstrebe 28, die mit dem Angriffspunkt 7 und der Verbindungsstruktur 25 verbunden ist, und eine weitere Verbindungsstruktur 25a, wobei die weitere Verbindungsstruktur 25a mit einem zweiten Endbereich der Schwenkachse (hier nicht gezeigt) und der Querstrebe 28 verbunden ist. Die Querstrebe verläuft hierbei bevorzugt in Fahrzeugsitzbreitenrichtung (B) und ist ebenfalls mit dem Rückenlehnenrahmen 20 verbunden.

Hierdurch wird ein konstruktiv besonders einfacher Fahrzeugsitz 1 bereitgestellt, wobei insbesondere die Rückenlehne 4 durch den Dämpfer 10 im Betrieb abgefedert werden kann und durch die besondere Position der ersten Schwenkachse 5 hinter dem Fahrzeugsitz 1, besonders bei einer Nach-vorne verschwenkten Rückenlehne 4, zur Verfügung gestellt werden kann.

Wie aus der Figur 1B zu erkennen ist, ist es denkbar, den Fahrzeugsitz 1 verschiebbar auf einer Verschiebeeinrichtung 33 zu installieren, wodurch weitere Einstellmöglichkeiten für den Fahrer bereitgestellt werden.

Aus den Figuren 2A und 2B ist der Fahrzeugsitz 1 der Figuren 1A und 1B in einer Seitenansicht dargestellt, wobei Figur 2A den Fahrzeugsitz 1 in einer Nach-vorne verschwenkten Position zeigt und Figur 2B den Fahrzeugsitz 1 in einer Sitzposition zeigt.

Wie aus dem Vergleich zwischen den Figuren 2A und 2B ersichtlich ist, wird die Rückenlehne 4 um die Schwenkachse 5 und insbesondere um den ersten Schwenkpunkt 6 geschwenkt. Der erste Schwenkpunkt 6 und der Befestigungspunkt 9 bleiben dabei ortsfest, der Angriffspunkt 7 verschwenkt sich dabei entlang einer Kurvenbahn um den ersten Schwenkpunkt 6. Demzufolge wird mit der Rückenlehne 4 auch die Verbindungsstruktur 25, die zwischen dem ersten Schwenkpunkt 6 und dem Angriffspunkt 7 angeordnet ist, wie auch ebenso wie der Dämpfer 10 verschwenkt, der über seinen zweiten Endbereich 22 mit der Verbindungsstruktur 25 verbunden ist. Während des Verschwenkvorgangs wird dabei die Länge des Dämpfers 10 geändert, wie aus dem Vergleich der Figuren 2A und 2B zu erkennen ist.

In der Figur 3 werden die Auswirkungen der unterschiedlichen, wählbaren Positionen der Schwenkachse 5 bzw. des ersten Schwenkpunkts 6 aufgezeigt. Dabei werden verschiedene Schwenkpunkte 6a, 6b, 6c untersucht, wobei zu jedem der Schwenkpunkte 6a, 6b, 6c dargestellt wird, wie sich die Rückenlehne 4 verschwenkt.

Dabei ist der Schwenkpunkt 6a der Schwenkpunkt, der in Fahrzeugsitzlängsrichtung (L) gesehen am weitesten hinten und in Fahrzeugsitzhöhenrichtung (H) am weitesten unten liegt.

Dadurch ist der effektive Anteil in Fahrzeugsitzlängsrichtung (L) des Verbindungsstücks 31 am geringsten, wodurch die bevorzugt vorhanden Polster, das Sitzpolster und das Rückenlehnenpolster, sich während des Nach-vorne-Verschwenkens der Rückenlehne 4 bereits sehr früh berühren und so ein weiteres Verschwenken verhindern. Berührungen finden beispielsweise zwischen dem in Fahrzeugsitzlängsrichtung (L) hinteren Teil des Sitzpolsters und dem in Rückenlehnenhöhenrichtung unteren Teil des Rückenlehnenpolsters (Bereich A) oder zwischen den Seitenwölbungen des Sitzpolsters und des Rückenlehnenpolsters (Bereich B) statt. Auch wird durch den weit unten und weit hinten liegenden Schwenkpunkt 6a auch bereits früh das Lenkrad berührt, was ebenso eine Einschränkung der Verschwenkung darstellt. Des Weiteren wird der untere Endbereich 37 der Rückenlehne 4 nicht merklich nach vorne bewegt, sondern im Wesentlichen mit seinem unteren Endbereich 37 in etwa an derselben Position verbleibt.

Schwenkpunkt 6b ist in etwa auf der gleichen Höhe wie Schwenkpunkt 6a angeordnet, allerdings befindet sich Schwenkpunkt 6b in Fahrzeugsitzlängsrichtung (L) gesehen weiter vorne als der Schwenkpunkt 6b. Dies bedeutet also, dass die effektive Länge des Verbindungsstücks 31 größer ist als bei dem Schwenkpunkt 6a, wodurch der untere Endbereich 37 der Rückenlehne bei einer Nach-vorne Verschwenkung der Rückenlehne 4 der untere Endbereich 37 weiter nach vorne bewegt wird. Somit berührt der untere Endbereich 37 der Rückenlehne 4, insbesondere das Rückenlehnenpolster 36, das Sitzpolster im allgemeinen später, jedoch ist hierbei die Berührung des Sitzpolsters 35 mit dem Rückenlehnenpolster 36 weiter die haupstächliche Ursache einer eingeschränkten Verschwenkung der Rückenlehne 4 nach vorne.

Schwenkpunkt 6c hingegen ist auf der gleichen Länge wie Schwenkpunkt 6b angeordnet, aber liegt höhenmäßig gesehen über dem Schwenkpunkt 6c. Dadurch, dass die effektive Länge die gleiche ist, aber die Höhe anders ist, wird der untere Endbereich 6b bei einer Nach-vorne-Verschwenkung der Rückenlehne weiter vom Sitzteil 2 und insbesondere vom Sitzpolster 35 wegbewegt. Eine Berührung des Sitzpolster 35 mit dem Rückenlehnenpolster 36 ist demnach noch später oder je nach Ausführung der Polster 35, 36 gar nicht vorgesehen. Schwenkpunkt 6c ist also der vorteilhaftere Schwenkpunkt. Jedoch sind alle Schwenkpunkte je nach Ausführung der Polster 35, 36 wählbar und vorteilhaft.

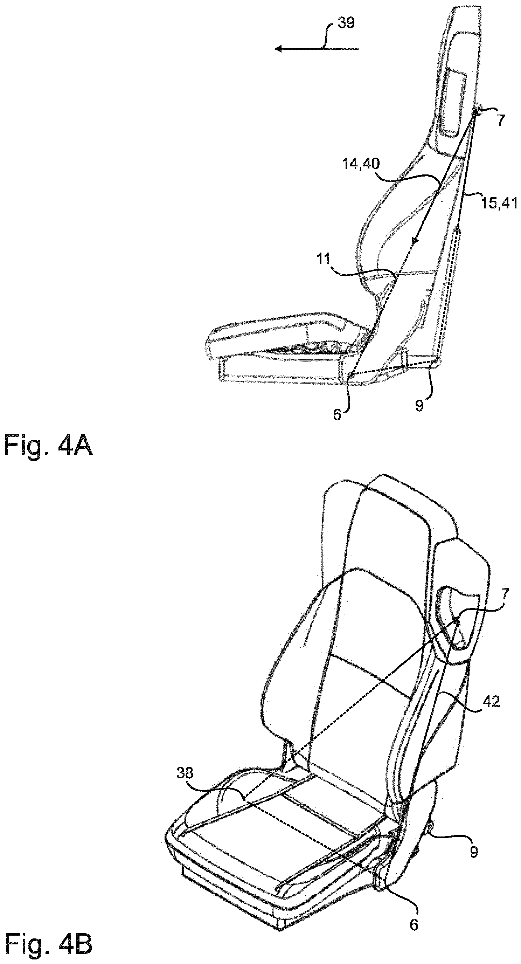

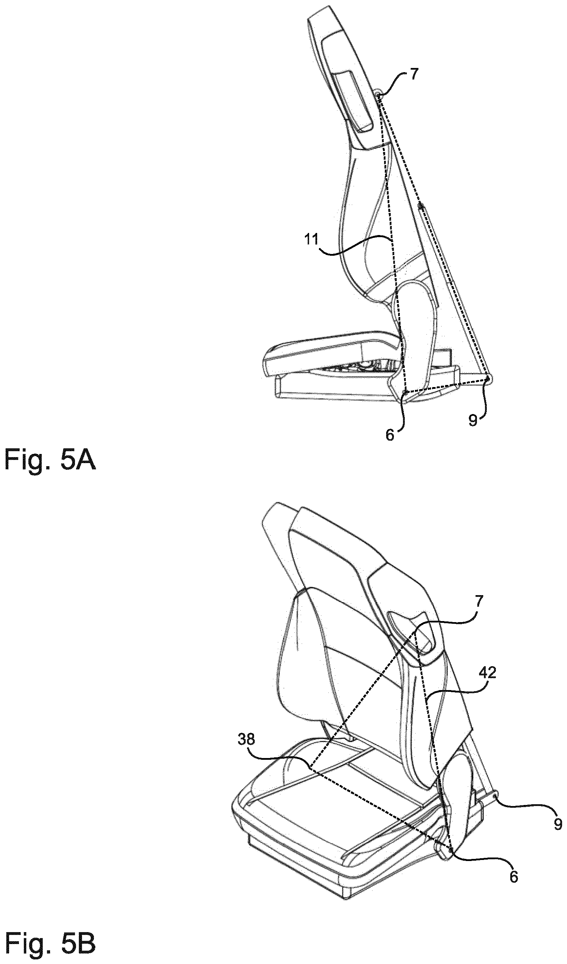

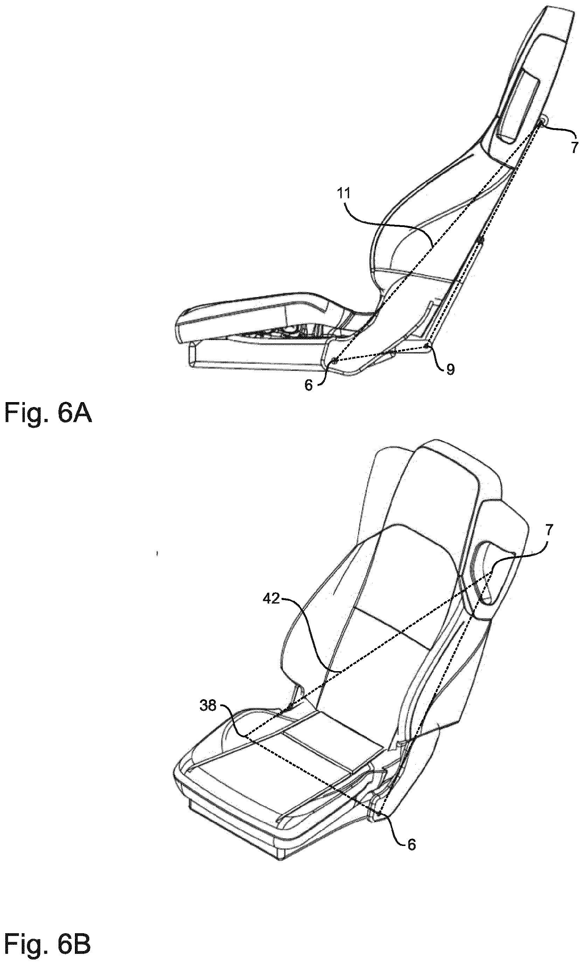

In den Figuren 4A, 5A, 6A und 7 wird das von dem Befestigungspunkt 9, dem Angriffspunkt 7 und dem ersten Schwenkpunkt 6 aufgespannte Dreieck 11 bei verschieden verschwenkten Rückenlehnen 4 gezeigt. Figuren 4B, 5B und 6B zeigen dabei ein weiteres Dreieck 42 von vorne, aufgespannt durch den ersten Schwenkpunkt 6, den Angriffspunkt 7 und einem zweiten Schwenkpunkt 38.

Dabei wirkt eine einwirkende Kraft 39 auf die Rückenlehne 4 ein. Üblicherweise ist die einwirkende Kraft die Kraft, mit der eine auf dem Sitz 1 sitzende Person, beispielsweise bei einem Unfall, an einen Sicherheitsgurt (hier nicht gezeigt) gedrückt wird und durch den Sicherheitsgurt am Sitz 1 gehalten wird. Der Sicherheitsgurt ist dabei vorzugsweise ein Drei-Punkt-Gurt, bestehend aus einem Beckengurt und einem Brustgurt. Der Gurtabrollmechanismus (hier nicht gezeigt) ist mit dem Rückenlehnenrahmen 20 verbunden und bildet dabei den Angriffspunkt 7.

Der Dämpfer 10 ist vorzugsweise unter Zug eingebaut und nimmt somit die Zugkomponente, dargestellt durch einen zweiten Vektor 41, auf. Die Verbindungsstruktur 25 nimmt dabei die Druckkomponente, dargestellt durch einen ersten Vektor 40, auf. Das durch die beiden Vektoren, dem ersten Vektor 40 und dem zweiten Vektor 41 resultierende Flächenmoment, das abhängig ist von der von den Vektoren 40, 41 gebildete Fläche, gibt an, wie viel einwirkende Kraft verteilt werden kann.

Figuren 4A, 5A und 6A zeigen dabei das von dem Befestigungspunkt 9, dem Angriffspunkt 7 und dem ersten Schwenkpunkt 6 gebildete Dreiecke eines Sitzes mit verschieden verschwenkten Rückenlehnen 4.

Die Figuren 4B, 5B und 6B zeigen dabei ein weiteres Dreieck 42, gebildet durch den ersten Schwenkpunkt 6, dem Angriffspunkt 7 und dem zweiten Schwenkpunkt 38. Diese Punkte sind im Wesentlichen die Punkte, an denen der Brustgurt und der Beckengurt angebracht sind. Durch dieses weitere Dreieck 42 wird die Druckkomponente weiter aufgeteilt, wobei zwischen dem ersten Schwenkpunkt 6 und dem Angriffspunkt 7 etwa 70%, zwischen dem zweiten Schwenkpunkt 38 und dem Angriffspunkt 7 etwa 30% der Druckkomponente angreifen.

Ebenso stellen die Figuren 4B, 5B und 6B das weitere Dreieck in verschiedenen Positionen dar, analog zu denen in den Figuren 4A, 5A und 6A.

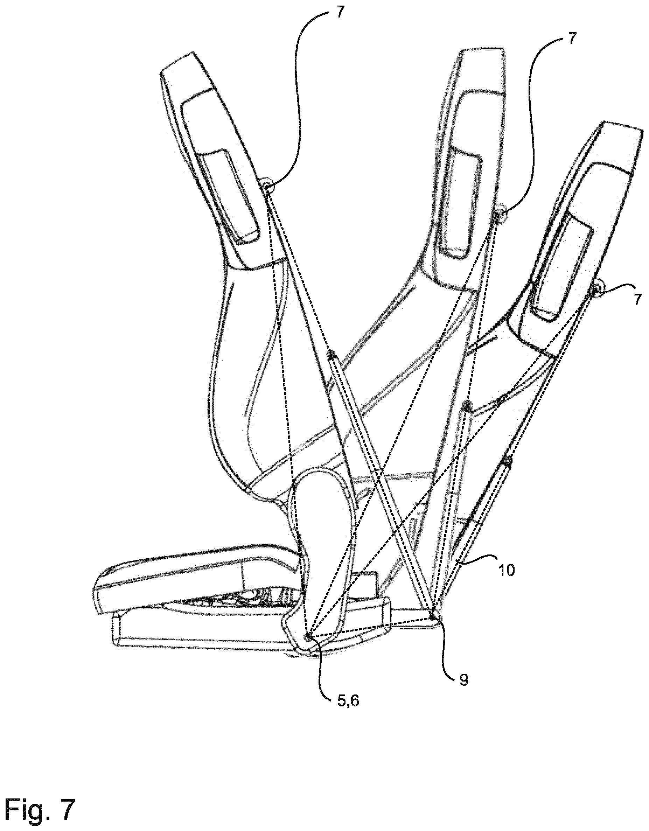

In der Figur 7 sind nochmals zusammengefasst alle Positionen der verschwenkbaren Rückenlehne 4 zu erkennen. Zu sehen sind also sowohl die nach vorne verschwenkte Position, die nach hinten verschwenkte Position sowie die unverschwenkte Position der Rückenlehne 4. Es ist deutlich erkennbar, wie sich die Stellung des Dämpfers 10 in der jeweiligen Position durch eine Verschwenkung verändert.

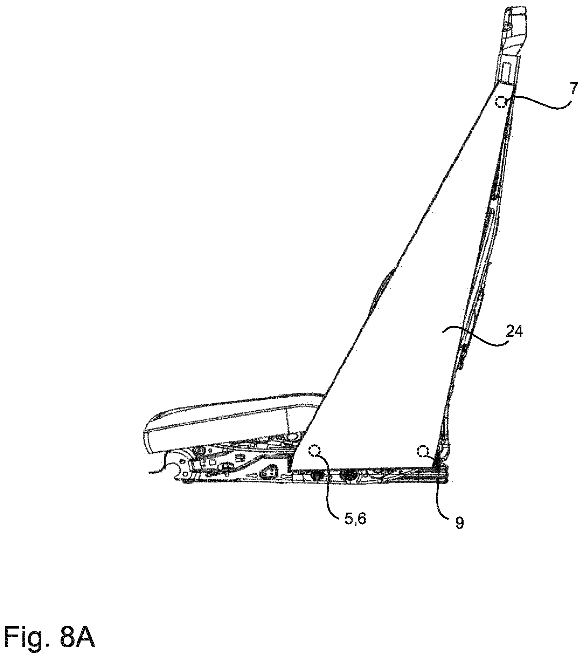

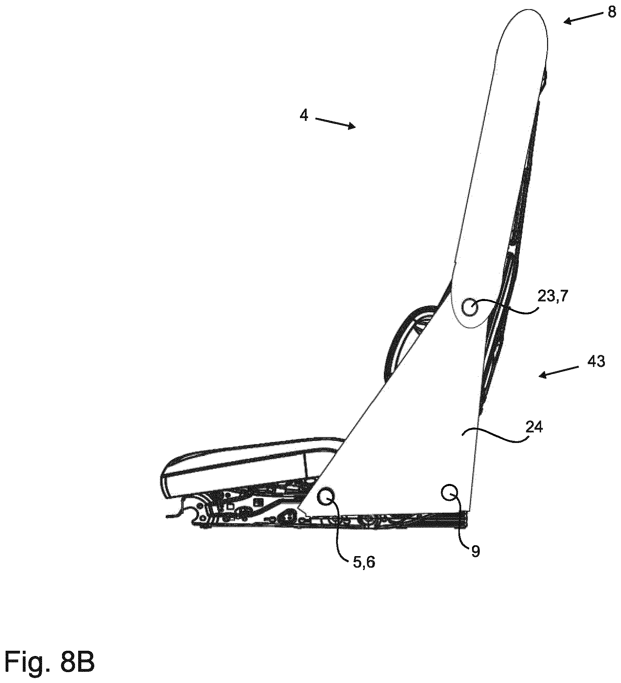

In den Figuren 8A und 8B sind weitere bevorzugte Ausführungsformen dargestellt. Figur 8A zeigt hierbei eine Verbindung des Angriffpunktes 7, des ersten Schwenkpunkts 6 und des Befestigungspunkts 9 mittels einer Blechverbindung 24, die vorzugsweise dreieckig ausgebildet ist. Der Befestigungspunkt 9 ist hierbei mittels des zweiten Endbereichs 22 des Dämpfers 10 mit der Blechverbindung verbunden, so dass auch weiterhin eine Verschwenkung der Rückenlehne möglich ist.

Der erste Schwenkpunkt 6, der Angriffspunkt 7 und der Befestigungspunkt 9 bilden dabei im Wesentlichen die Eckpunkte der dreieckig ausgebildeten Blechverbindung 24. Somit verlaufen die Vektoren von Kräften vorzugsweise entlang den Seiten des durch die Blechverbindung 24 gebildeten Dreiecks, so dass eine möglichst große Fläche durch die Vektoren beschrieben wird. So können möglichst große Kräfte übertragen werden, da durch eine möglichst große eingeschlossene Fläche durch die Vektoren ein großes Flächenträgheitsmoment ausgebildet wird.

Die in der Figur 8B gezeigt Ausführungsform umfasst dabei eine zweite Schwenkachse 23, mittels derer ein oberer Teil 8 der Rückenlehne 4 gegenüber einem unterem Teil 43 der Rückenlehne verschwenkbar ist. Die Blechverbindung ist hierbei zwischen dem ersten Schwenkpunkt 6, dem Befestigungspunkt 9 und der zweiten Schwenkachse 23 angeordnet. Die zweite Schwenkachse 23 kann hier als ein Angriffspunkt verstanden werden, da, auch wenn die auf den Sitz einwirkende Kraft zuerst vorteilhaft auf den Gurtabrollmechanismus einwirkt, so wird diese Kraft jedoch aufgrund der schwenkbaren Verbindung zwischen dem oberen 8 und dem unterem Teil 43 der Rückenlehne 4 die Kraft auf die zweite Schwenkachse 23 übertragen. Somit kann also die zweite Schwenkachse 23 ebenso als der Angriffspunkt 7 verstanden werden.

### Bezugszeichenliste

- 1: Fahrzeugsitz
- 2: Sitzteil
- 3: Sitzteilrahmen
- 4: Rückenlehne
- 5: Schwenkachse
- 6: erster Schwenkpunkt
- 7: Angriffspunkt
- 8: oberer Bereich der Rückenlehne
- 9: Befestigungspunkt
- 10: Dämpfer
- 11: Dreieck
- 12a, 12b, 12c: Seiten des Dreiecks
- 13: einwirkende Kraft
- 14: erster Vektor einer Druckkraft
- 15: zweiter Vektor einer Zugkraft
- 16: hinterer Abschnitt des Sitzteilrahmens
- 17: Verbindungselement
- 18: obere Hälfte der Rückenlehne
- 19: Gurtabrollmechanismus
- 20: Rückenlehnenrahmen
- 21: erster Endbereich des Dämpfers
- 22: zweiter Endbereich des Dämpfers
- 23: zweite Schwenkachse
- 24: Blechverbindung
- 25: Verbindungsstruktur
- 25a: weitere Verbindungsstruktur
- 26: Blechstück
- 27: Verbinder
- 28: Querstrebe
- 29: Sitzpolster
- 30: weitere Schwenkpunkte
- 31: Verbindungsstück
- 32: Arretierung
- 33: Verschiebeeinrichtung
- 35: Sitzpolster
- 36: Rückenlehnenpolster
- 37: unterer Endbereich der Rückenlehne
- 38: zweiter Schwenkpunkt
- 39: einwirkende Kraft
- 40: erster Vektor
- 41: zweiter Vektor
- 42: weiteres Dreieck
- 43: unterer Teil der Rückenlehne
- H: Sitzhöhenrichtung
- L: Sitzlängsrichtung
- B: Sitzbreitenrichtung

## Patentansprüche

1. Fahrzeugsitz (1) mit einem Sitzteil (2), einem Sitzteilrahmen (3) und einer Rückenlehne (4), die mittels mindestens einer Schwenkachse (5) mit dem Sitzteilrahmen (3) schwenkbar verbunden ist,
**dadurch gekennzeichnet, dass**
durch einen ersten Schwenkpunkt (6), der auf der Schwenkachse (5) angeordnet ist, einen Angriffspunkt (7), der sich in Rückenlehnenhöhenrichtung gesehen in einer oberen Hälfte der Rückenlehne (4) befindet und durch einen an der Rückenlehne (4) befestigtem Gurtabrollmechanismus (19) gegeben und mit einem Rückenlehnenrahmen (20) verbunden ist, und einen Befestigungspunkt (9) zur Befestigung mindestens eines Dämpfers (10), wobei der Dämpfer (10) im Wesentlichen in Rückenlehnenhöhenrichtung ausgerichtet ist und mit der Rückenlehne (4) einerseits sowie mit dem Sitzteilrahmen (3) mittels des Befestigungspunkts (9) andererseits wirkverbunden ist, Eckpunkte eines Dreiecks (11) definiert sind, entlang dessen Seiten (12a, 12b, 12c) Vektoren von Kräften verlaufend angeordnet sind, wobei sich bei einer Nach-vorne-Verschwenkung der Rückenlehne (4) durch eine auf die Rückenlehne (4) einwirkenden Kraft (13) von dem Angriffspunkt (7) zu dem ersten Schwenkpunkt (6) hin ein erster Vektor einer Druckkraft (14) und sich von dem Befestigungspunkt (9) zu dem Angriffspunkt (7) hin ein zweiter Vektor einer Zugkraft (15) erstreckt.

2. Fahrzeugsitz nach Anspruch 1,
**dadurch gekennzeichnet, dass**
eine erste Schwenkachse (5) in Fahrzeugsitzbreitenrichtung (B) verläuft und in Fahrzeugsitzlängsrichtung (L) gesehen im mittleren Drittel des Sitzteilrahmens (3) angeordnet ist und in Fahrzeugsitzhöhenrichtung (H) gesehen unterhalb des Sitzteils (2) angeordnet ist.

3. Fahrzeugsitz nach Anspruch 1 oder 2,
**dadurch gekennzeichnet, dass**
der Befestigungspunkt (9) in Fahrzeugsitzlängsrichtung (L) gesehen hinter einem hinteren Abschnitt (16) des Sitzteilrahmens (3) angeordnet ist und durch ein Verbindungselement (17) mit dem hinteren Abschnitt (16) verbunden ist.

4. Fahrzeugsitz nach einem der vorangegangenen Ansprüche,
**dadurch gekennzeichnet, dass**
der Dämpfer (10) mit einem ersten Endbereich (21) mit dem Befestigungspunkt (9) und mit einem zweiten Endbereich (22) mit der Rückenlehne (4) verbunden ist.

5. Fahrzeugsitz nach Anspruch 4,
**dadurch gekennzeichnet, dass**
der zweite Endbereich (22) mit dem Angriffspunkt (7) wirkverbunden ist.

6. Fahrzeugsitz nach Anspruch 4 oder 5,
**dadurch gekennzeichnet, dass**
der erste Endbereich (21) lösbar mit dem Befestigungspunkt (9) verbunden ist.

7. Fahrzeugsitz nach einem der vorangegangen Ansprüche,
**dadurch gekennzeichnet, dass**
der Befestigungspunkt (9), der Angriffspunkt (7) und der Schwenkpunkt (6) in einer Ebene liegen, die parallel zu der durch die Fahrzeugsitzlängsrichtung (L) und Fahrzeugsitzhöhenrichtung (H) aufgespannten Ebene ist.

8. Fahrzeugsitz nach einem der vorangegangenen Ansprüche,
**dadurch gekennzeichnet, dass**
die Rückenlehne (4) eine zweite Schwenkachse (23) aufweist, so dass ein in Rückenlehnenhöhenrichtung gesehener oberer Teil (8) der Rückenlehne (4) gegenüber einem unteren Teil (37) der Rückenlehne (4) verschwenkbar ist.

9. Fahrzeugsitz nach einem der vorangegangenen Ansprüche,
**dadurch gekennzeichnet, dass**
der Befestigungspunkt (9), der Angriffspunkt (7) und der erste Schwenkpunkt (6) mittels einer Blechverbindung (24) miteinander verbunden sind.

10. Fahrzeugsitz nach einem der Ansprüche 1 bis 9,
**dadurch gekennzeichnet, dass**
der Angriffspunkt (7) und der erste Schwenkpunkt (6) mittels einer Verbindungsstruktur (25) verbunden sind und der Dämpfer (10) mit dieser Verbindungsstruktur (25) verbunden ist.

11. Fahrzeugsitz nach einem der vorangegangenen Ansprüche,
**dadurch gekennzeichnet, dass**
der Dämpfer (10) ein Einrohrdämpfer oder ein Zweirohrdämpfer ist.

## Claims

1. Vehicle seat (1) comprising a seat part (2), a seat-part frame (3) and a backrest (4) that is pivotably connected to the seat-part frame (3) by means of at least one swivel axis (5),
**characterised in that**
vertices of a triangle (11) are defined by a first pivot point (6) that is arranged on the swivel axis (5), a point of application (7) that is located in a top half of the backrest (4) when viewed in the vertical direction of the backrest, is provided by a belt unrolling mechanism (19) fastened to the backrest (4) and is connected to a backrest frame (20), and a fastening point (9) for fastening at least one damper (10), the damper (10) being oriented substantially in the vertical direction of the backrest and being operatively connected both to the backrest (4) and to the seat-part frame (3) by means of the fastening point (9), along the sides (12a, 12b, 12c) of which triangle vectors of forces extend, a first vector of a compressive force (14) extending from the point of application (7) to the first pivot point (6), and a second vector of a tensile force (15) extending from the fastening point (9) to the point of application (7) in the event of the backrest (4) being pivoted forwards by a force (13) acting on the backrest (4).

2. Vehicle seat according to claim 1,
**characterised in that**
a first swivel axis (5) extends in a vehicle seat width direction (B) and is arranged in the central third of the seat-part frame (3) when viewed in the vehicle seat length direction (L) and is arranged below the seat part (2) when viewed in the vertical direction of the vehicle seat (H).

3. Vehicle seat according to either claim 1 or claim 2,
**characterised in that**
the fastening point (9) is arranged behind a rear portion (16) of the seat-part frame (3) when viewed in the vehicle seat length direction (L) and is connected to the rear portion (16) by means of a connection element (17).

4. Vehicle seat according to any of the preceding claims,
**characterised in that**
the damper (10) is connected by a first end region (21) to the fastening point (9) and by a second end region (22) to the backrest (4).

5. Vehicle seat according to claim 4,
**characterised in that**
the second end region (22) is operatively connected to the point of application (7).

6. Vehicle seat according to either claim 4 or claim 5,
**characterised in that**
the first end region (21) is releasably connected to the fastening point (9).

7. Vehicle seat according to any of the preceding claims,
**characterised in that**
the fastening point (9), the point of application (7) and the pivot point (6) are located in a plane that is in parallel with the plane spanned by the vehicle seat length direction (L) and the vertical direction of the vehicle seat (H).

8. Vehicle seat according to any of the preceding claims,
**characterised in that**
the backrest (4) comprises a second swivel axis (23) so that an upper part (8) of the backrest (4), viewed in the vertical direction of the backrest, is pivotable relative to a lower part (37) of the backrest (4).

9. Vehicle seat according to any of the preceding claims,
**characterised in that**
the fastening point (9), the point of application (7) and the first pivot point (6) are interconnected by means of a sheet metal connection (24).

10. Vehicle seat according to any of claims 1 to 9,
**characterised in that**
the point of application (7) and the first pivot point (6) are connected by means of a connection structure (25), and the damper (10) is connected to said connection structure (25).

11. Vehicle seat according to any of the preceding claims,
**characterised in that**
the damper (10) is a single-tube damper or a twin-tube damper.

## Revendications

1. Siège de véhicule (1) comportant une partie de siège (2), un cadre de siège (3) et un dossier (4), qui est relié de manière pivotante au cadre de siège (3) au moyen d'au moins d'un axe de pivotement (5),
**caractérisé par le fait que**
par un premier point de pivotement (6) qui est disposé sur l'axe de pivotement (5), un point d'application (7), qui se trouve dans une moitié supérieure du dossier (4) en regardant en direction de la hauteur du dossier, et est donné par un mécanisme de déroulement de ceinture (19) fixé au dossier (4) et est relié à un cadre de dossier (20), et un point de fixation (9) pour la fixation d'au moins un amortisseur (10), l'amortisseur (10) étant orienté sensiblement en direction de la hauteur du dossier et étant relié fonctionnellement avec le dossier (4) d'une part ainsi qu'avec le cadre de siège (3) au moyen du point de fixation (9) d'autre part, des sommets d'un triangle (11) sont définis, le long des côtés (12a, 12b, 12c) duquel s'étendent des vecteurs de forces, où, lors d'un pivotement vers l'avant du dossier (4) par une force (13) agissant sur le dossier (4), un premier vecteur d'une force de compression (14) s'étend du point d' application (7) au premier point de pivotement (6) et un second vecteur d'une force de traction (15) s'étend du point de fixation (9) au point d' application (7).

2. Siège de véhicule selon la revendication 1,
**caractérisé par le fait que**
un premier axe de pivotement (5) s'étend en direction de la largeur du siège de véhicule (B) et est disposé dans le tiers médian du cadre de siège (3) en regardant en direction de la longueur du siège de véhicule (L) et est disposé sous la partie de siège (2) en regardant en direction de la hauteur du siège de véhicule (H).

3. Siège de véhicule selon l'une des revendications 1 ou 2,
**caractérisé par le fait que**
le point de fixation (9) est disposé derrière une section arrière (16) du cadre de siège (3) en regardant en direction de la longueur du siège de véhicule (L) et est relié à la section arrière (16) par un élément de liaison (17).

4. Siège de véhicule selon l'une des revendications précédentes,
**caractérisé par le fait que**
l'amortisseur (10) est relié au point de fixation (9) par une première zone d'extrémité (21) et au dossier (4) par une seconde zone d'extrémité (22).

5. Siège de véhicule selon la revendication 4,
**caractérisé par le fait que**
la seconde zone d'extrémité (22) est reliée fonctionnellement au point d' application (7).

6. Siège de véhicule selon l'une des revendications 4 ou 5,
**caractérisé par le fait que**
la première zone d'extrémité (21) est reliée de manière amovible au point de fixation (9).

7. Siège de véhicule selon l'une des revendications précédentes,
**caractérisé par le fait que**
le point de fixation (9), le point d' application (7) et le point de pivotement (6) se situent dans un plan qui est parallèle au plan défini par la direction de la longueur du siège de véhicule (L) et la direction de la hauteur du siège du véhicule (H).

8. Siège de véhicule selon l'une des revendications précédentes,
**caractérisé par le fait que**
le dossier (4) présente un second axe de pivotement (23), de telle sorte qu'une partie supérieure (8) du dossier (4) en regardant en direction de la hauteur du dossier est apte à pivoter par rapport à une partie inférieure (37) du dossier (4).

9. Siège de véhicule selon l'une des revendications précédentes,
**caractérisé par le fait que**
le point de fixation (9), le point d' application (7) et le premier point de pivotement (6) sont reliés entre eux au moyen d'une liaison en tôle (24).

10. Siège de véhicule selon l'une des revendications 1 à 9,
**caractérisé par le fait que**
le point d' application (7) et le premier point de pivotement (6) sont reliés au moyen d'une structure de liaison (25) et l'amortisseur (10) est relié à cette structure de liaison (25).

11. Siège de véhicule selon l'une des revendications précédentes,
**caractérisé par le fait que**
l'amortisseur (10) est un amortisseur à un tube ou un amortisseur à deux tubes.
